# EUROPEAN PATENT SPECIFICATION

(11) **EP 0 978 127 B1**
(45) Date of publication and mention of the grant of the patent: **05.01.2005**
(21) Application number: 99908008.8
(22) Date of filing: 22.02.1999
(51) Int. Cl.: H01B 3/44, H01B 7/02, H01B 9/02

(54) **INSULATED ELECTRIC CABLE**
ISOLIERTES ELEKTRISCHES KABEL
CABLE ELECTRIQUE ISOLE

(30) Priority: 25.02.1998 SE 9800567
(43) Date of publication of application: 09.02.2000
(73) Proprietor: ABB AB, 721 83 Västeras (SE)
(72) Inventor: JONSSON, Jonas, S-192 58 Sollentuna (SE); TÖRNKVIST, Christer, S-722 23 Västeras (SE)
(74) Representative: Lundblad Vannesjö, Katarina
(86) International application number: PCT/SE1999/000240
(87) International publication number: WO 1999/044206

(56) References cited:
- EP-A2- 0 674 325
- WO-A1-98/34236
- JP-A- 1 024 307
- JP-A- 1 024 308
- JP-A- 6 111 629
- JP-A- 6 267 334
- JP-A- 7 130 227
- JP-A- 7 176 213
- JP-A- 8 306 243
- JP-A- 9 165 472
- US-A- 3 711 631
- US-A- 3 876 462
- US-A- 5 304 619
- FILE WPI, Derwent Accession No. 90-055656, FUJIKURA CABLE WORKS LTD., "DC Power Cable - Consisting of Insulating Layer of Low Pressure Process Polyethylene Graft Polymerised with Maleic Anhydride"; & JP,A,02 010 610 (16-01-90).
- STN INTERNATIONAL, File CAPLUS, CAPLUS Accession No. 1994:606911, HITACHI CABLE, "Amine-Containing Ethylene Resin Compositions and Electric Wires or Cables Therewith"; & JP,A,06 111 629 (22-04-94).
- STN INTERNATIONAL, File CAPLUS, CAPLUS Accession No. 1995:389734, Document No. 122:136307, HITACHI CABLE, "Electric Insulators, Electric Wires and Electric Cables"; & JP,A,06 267 334 (22-09-94).
- STN INTERNATIONAL, File CAPLUS, CAPLUS Accession No. 1995:792863, Document No. 123:172943, HITACHI CABLE, "Water-Treeing-Resistant Electric Insulation Compositions and Electric Wires and Cables Using the Same"; & JP,A,07 176 213 (14-07-95).

## Description

### TECHNICAL FIELD

The present invention relates to an electric cable having an insulation system comprising a polymeric composition. The polymeric composition is typically extruded and cross-linked. In particular the invention relates to a cable having an extruded and cross-linked polyethylene, PE, composition, an XLPE composition. The present invention relates in particular to an insulated electric cable with an insulation system comprising a plurality of layers, such as an inner semi-conductive shield, an extruded insulation and an outer semi-conductive shield.

At least the extruded insulation comprises a cross-linked polymeric electrically insulating composition with a system of additives typically comprising cross-linking agent, scorch retarding agent and anti-oxidant. A cable according to the present invention is favorable used in systems for transmission and distribution of electric power and also as an insulated conductor in a high voltage winding in an electric machine or other application wherein the electrically insulation layer in the cable is subjected to a high voltage stress.

### BACKGROUND ART

Many of the first electrical supply systems for transmission and distribution of electrical power were based on DC technology. However, these DC systems were rapidly superseded by systems using alternating current, AC. The AC systems had the desirable feature of easy transformation between generation, transmission and distribution voltages. The development of modem electrical supply systems in the first half of this century was exclusively based on AC transmission systems. By the 1950s there was a growing demand for long distance transmission schemes and it became clear that under certain circumstances there could in these schemes be benefits by adopting a DC based system. An important benefit of DC operation is the virtual elimination of dielectric losses, thereby offering a considerable gain in efficiency and savings in equipment. The DC leakage current is of such small magnitude that it can be ignored in current rating calculations, whereas in AC cables dielectric losses cause a significant reduction in current rating. This is of considerable importance for higher system voltages. Similarly, high capacitance is not a penalty in DC cables. A typical DC-transmission cable includes a conductor and an insulation system comprising a plurality of layers. such as an inner semi-conductive shield, an insulation base body and an outer semi-conductive shield. The cable is also complemented with casing, reinforcement etc to withstand water penetration and any mechanical wear or forces during production, installation and use.

Almost all the DC cable systems supplied so far have been for submarine crossings or the land cable associated with them. For long crossings the mass-impregnated solid paper insulated type cable is chosen because there are no restrictions on length due to pressurizing requirements. To date insulation systems with a solid essentially all paper insulation impregnated with an electrically insulating oil are used. Application of laminated material such as a polypropylene paper laminate is being pursued to gain advantage of the increased impulse strength and reduced diameter.

As in the case of AC transmission cables, transient voltages is a factor that has to be taken into account when determining the insulation thickness of DC cables. It has been found that the most onerous condition occurs when a transient voltage of opposite polarity to the operating voltage is imposed on the system when the cable is carrying full load. If the cable is connected to an overhead line system, such a condition usually occurs as a result of lightning transients.

Extruded solid insulation based on a polyethylene, PE, or a cross linked polyethylene. XLPE, has for almost 40 years been used for AC transmission and distribution cable insulation. Therefore the possibility of the use of XLPE and PE for DC cable insulation has been under investigation for many years. Cables with such insulations would have the same advantage as the mass impregnated cable. For DC transmission there are no restrictions on circuit length. Cable insulations based on XLPE also have a potential for being operated at higher temperatures than conventional mass impregnated paper based cable insulations. In the case of XLPE, 90°C instead of 50°C for conventional DC-cables. Thus offering a possibility to increase the transmission load. However, it has not been possible to obtain the full potential of these polymeric materials for full size cables. It is believed that one of the main reasons is the development and accumulation of space charges in the dielectric when subjected to a DC-field. Such space charges distort the electrical stress distribution and persist for long periods because of the high resistivity of the polymers. Space charges in an insulation body do when subjected to the forces of an electric DC-field accumulate in a way such that a polarized pattern similar to a capacitor is formed. Space charge accumulation is often divided into two basic types of patterns, differing in the polarity of the space charge accumulation. The space charge accumulation results in a local increase at certain points of the actual electric field in relation to the field. This shall be contemplated when considering the geometrical dimensions and dielectric characteristics of an insulation. The increase noted in the actual field might be 5 or even 10 times the contemplated field. Thus the design field for a cable insulation must include a safety factor taking into account this considerably higher field. Therefore, typically thick insulation layers and/or expensive materials are used in the cable insulation. The space charge accumulation is, at least in some aspects, a slow process, therefore this problem is accentuated when the polarity of the cable after being operated for a long period of time at same polarity is reversed. As a result of such a reversal a capacitive field is superimposed on the applied field. As a consequence the space charge accumulation peak in the profile and the point of maximal field stress is moved from the interface and into the insulation. Attempts have been made to improve the situation by the use of additives to reduce the insulation resistance without seriously affecting other properties. To date it has not been possible to match the electrical performance achieved with the impregnated paper insulated cables and no commercial polymeric insulated DC cables have been installed. However, successful laboratory tests have been reported on a 250 kV cable with a maximum stress of 20 kV/mm using XLPE insulation with mineral filler (Y. Maekawa et al, Research and Development of DC XLPE Cables, JiCable'91, pp. 562-569). This stress value compares with 32 kV/mm used as a typical value for mass-impregnated paper cables.

In Japanese Patent Publication JP-A-1024307 a DC-cable is provided with space charge mitigating layers between an inner semi-conductive layer and an insulation layer and/or between the insulation layer and an outer semi-conductive layer to prevent accumulation of space charges. The space charge mitigating layers are formed by copolymerization with an aromatic monomer.

In Japanese Patent Publication JP-A-8306243 an insulated DC-cable is provided with charge capturing layers on the inside and the outside of the cross-linked polyolefin insulating layer to eliminate accumulation of space charges generated in the insulating layer. The charge capturing layer is made of polyamide modified polyolefin.

Another aspect to consider for extruded polymeric insulation is charge injection at any interface between the insulating layer in an insulation system and conducting or semi-conducting layer or body arranged in contact with the insulating layer. The risk for charge injection is drastically increased if the electrical properties of the conducting body or semi-conducting shield in contact with the insulating layer is inhomogenous. Earlier it has been considered that charge injection is likely to occur in LDPE insulating composition under AC conditions when the load is higher than 15-20 kV/mm. See e.g. J. Jonsson. B Rånby. D. Mary. C. Laurent and C. Mayoux, IEEE Trans. Diel. Electr. Insul..2. 107(1995), or T. Mizuno. Y.S. Liu, W. Shionoya, K. Yasuoka, S. Ishii, H. Miyata and A. Yokoyama. IEEE Trans. Diel. Electr. Insul.. 4, 433(1997). At higher loads, e.g. the loads anticipated to occur in the interface between the insulating layer and a semi-conductive shield within a cable for high voltage direct current transmission of electric power, approx. 100 kV/mm, the risk of charge injection is substantial. As charge injection risk to enhance aging of the polymeric material in the insulating layer it also put the expected life-time of the cable at risk.

An extruded resin composition for AC cable insulation typically comprises a polyethylene resin as the base polymer complemented with various additives such as a peroxide as cross-linking agent, a scorch retarding agent and an anti-oxidant or a system of anti-oxidants. In the case of an extruded insulation the semi-conductive shields are typically also extruded and comprise a resin composition that in addition to the base polymer and an electrically conductive or semi-conductive filler comprises essentially the same type of additives. The various extruded layers in an insulated cable in general are often based on a polyethylene resin. Polyethylene resin means generally and in this application a resin based on polyethylene or a copolymer of ethylene, wherein the ethylene monomer constitutes a major part of the mass. Thus polyethylene resins may be composed of ethylene and one or more monomers which are co-polymerised with ethylene. LDPE, low density polyethylene, is today the predominant insulating base material for AC-cables. To improve the physical properties of the extruded insulation and its capability to withstand degradation and decomposition under the influence of the conditions prevailing under production, shipment, laying, and use of such a cable the polyethylene based composition typically comprises additives such as:
- stabilizing additives, e.g. antioxidants, electron scavengers to counteract decomposition due to oxidation: radiation etc.;
- lubricating additives, e.g. stearic acid, to increase processability;
- additives for increased capability to withstand electrical stress, such as being more water tree resistant, examples of such additives are polyethylene glycol, silicones etc.: and
- cross-linking agents such as peroxides and silanes, which. upon a following treatment such as heating or exposing for radiation, e.g. X-ray, Infrared, Ultraviolett, decompose into free radicals and initiate cross-linking of the polyethylene resin. sometimes used in combination with
- unsaturated compounds having the ability to enhance the cross-linking density:

- scorch retarders to avoid premature cross-linking.

The number of various additives is large and the possible combinations thereof is essentially unlimited. When selecting an additive or a combination or group of additives the aim is that one or more properties shall be improved while others shall be maintained or if possible also improved. However. in reality it is always next to impossible to forecast all possible side effects of a change in the system of additives. In other cases the improvements sought for are of such dignity that some minor negative effects have to be accepted, although there is always an aim to minimize such negative effects.

A typical polyethylene based resin composition to be used as an extruded, cross-linked insulation in an AC-cable comprises:
97.1 - 98.9 % by weight of low density polyethylene (922 kg/m³) of melt flow rate 0.4 - 2.5 g/10 min with a system of additives as described in the forgoing.
These additives can comprise:
0.1 - 0.5 % by weight of an antioxidant, such as but not limited to SANTONOX R® (Flexsys Co) with the chemical designation 4,4'-thio-bis(6-tert-butyl-m-cresol), and
1.0 - 2.4 % by weight of a cross-linking agent such as but not limited to , DICUP R® (Hercules Chem) with the chemical designation dicumyl peroxide.
It is well known that this type of XLPE composition exhibits a strong tendency to form space charges under DC electric fields, thus making it unusable in insulation systems for DC cables. However, it is also known that extended degassing, i.e. exposing the cross-linked cable insulation at elevated temperatures to a vacuum for long periods of time, will result in a somewhat decreased tendency to space charge accumulation under DC voltage stress. It is generally believed that the vacuum treatment removes the peroxide decomposition products, such as acetophenone and cumyl alcohol, from the insulation whereby the space charge accumulation is reduced. Degassing is a time-consuming batch-process comparable with impregnation of paper insulations and thus as costly. Therefore it is advantageous if the need for degassing is removed. Most known cross-linked polyethylene compositions used as extruded insulation in AC-cable exhibit a tendency for space charge accumulation which renders them unsuitable for use in insulation systems for DC-cables.

It is known to add low amounts of an additive comprising carbonyl groups to a LDPE for the dual purpose of increasing resistivity and decreasing space charge accumulation. Such addition of carbonyl is accomplished either by oxidizing polyethylene or by a co-polymerization of carbon monoxide with ethylene. Further it has been noted, J. Jonsson and C. Törnkvist, Proc. Nord-IS, 217(1996) that an addition of carbonyl groups to a content of 0.4 -1.0 % by weight to polyethylene might reduce the charge injection. One plausible cause offered for this is that the carbonyl groups act as trap sites for space charges, whereby the mobility of any space charges is restricted and also any development of a polarized pattern within the insulation as a result of space charge accumulation when the insulation is subjected to a DC-field. However, a tendency for detrapping and thereby an increased space charge accumulation has also been noted at elevated temperatures, e.g. temperatures above about 40°C. Also additives in the form of organic acids and anhydrides have shown to give similar effects. Further molar modifications of the polyethylene has been suggested by introduction of polar units into the polymer to obtain a higher DC-breakdown strength. For example Japanese Patent Publication JP-A-210610 reports that an anhydride such as Maleic Acid Anydride, MAH, have been grafted onto the polyethylene for this purpose: The resulting cross-linked insulation material exhibited a decrease in space charge accumulation attributed to the increased polarity of the cross-linked polymer chain structure and it was concluded that the grafted MAH groups, which are fixed within the cross-linked structure, act as trap sites for any space charges. In JP-A-210610 it was reported that cross-linked polyethylene with additions of MAH at levels corresponding to from about 0.02 to about 0.5 % by weight resulted in cross-linked composition suitable for use as insulation in a DC-cable with a decreased space charge accumulation. Other additions used for such polar modification of the cross-linked structure and associated with reduction in space charge accumulation in the cross-linked insulation is ionomers. acrylic metal salts, carboxylic acid and acetates.

Thus it is desirous to provide an insulated cable with a polymer based electrical insulation system comprising an extruded XLPE composition suitable for use as a transmission and distribution cable in networks and installations for transmission and distribution of electric power. The cable shall typically be produced with a process for application and processing of the extruded XLPE based insulation which can be carried out in a manner such that there is no need for any lengthy time consuming batch-treatment such as impregnation or degassing, i.e. vacuum treatment of the cable to ensure stable and consistent dielectric properties and a high and consistent electric strength of the cable insulation. The cable insulation shall further exhibit a low tendency to space charge accumulation, a high DC breakdown strength, a high impulse strength, high insulation resistance and a high capability to withstand charge injection. This would offer both technical and economical advances over prior art methods as production time and production costs can be reduced and the possibility for an essentially continuous or at least semi-continuous process for the application and processing of the cable insulation system is provided. Further the reliability, the low maintenance requirements and the long working life of a conventional cable, e.g. a transmission cable comprising a mass impregnated paper-based insulation, shall be maintained or improved. The cable according to the present invention shall as an extra advantage open for an increase in the electrical strength and thus allow an increase in operation voltages, improve handleability and robustness of the cable.

In particular it is desirous to provide an insulated electric cable wherein the extruded and cross-linked PE composition contained in the insulation system comprises a three dimensional cross-linked structure with a capability to restrict the mobility of charges within the insulation layer of the cable thereby reducing the tendency to space charge accumulation, raising the capability to withstand charge injection and providing means for controlling any developing space charge profile or pattern within the insulation layer. Restricting the mobility of charges would thus be of great value in most insulated conductors operating at high voltages. The reduction in mobility of any charges which would be achieved with a cable according to the present invention provides as an extra economical advantage a capability to reduce safety factors in design values used for dimensioning the cable insulation. In particular such a cable is desirous for operation under the specific conditions prevailing in a network or installation for transmission or distribution of electrical power. Such a cable would be attractive to use as transmission cable and as a conductor winding in a high voltage electric device, such as a generator, a transformer, a reactor or a motor or any other cable application wherein the insulation will be subjected to a high voltage stress.

### SUMMARY OF THE INVENTION

It is an object of the present invention to provide an insulated electric cable that meets the desires as specified in the foregoing. This is according to the present invention achieved by a cable as defined in the preamble of claim 1 having a polymer based insulation system comprising an extruded cross-linked polyethylene composition disposed around a conductor characterized by the further measures according to the characterizing part of claim 1. Further developments of the invented cable are characterized by the features of the additional claims 2 to 15. It is also an object of the present invention to present the particularly advantageous uses of the cable according to the present invention as defined in claims 16 and 17.

### DESCRIPTION OF THE INVENTION

In order to use polymer based cable insulation systems comprising at least one polymer based insulation layer and one or more semi-conductive layers several factors have to be taken into account. One important issue is the restriction of the mobility of charges as a successful restriction of charges will:
- reduce the tendency for space charge accumulation within the polymeric insulation layer when subject to a high voltage stress and in particular a high DC-voltage stress;
- increase the capability of the insulation layer to withstand charge injection;
- and provide means for controlling any developing space charge profile or pattern within the insulation system. The present invention accomplish a significant decrease in the mobility of charges and thereby the sought for reduction in space charge accumulation, increased capability to withstand charge injection and the also sought for tool to control any developing space charge profile or pattern occurring within the insulation layer by implementing a polar enriched surface zone within the insulation layer. The polar enriched surface zone comprises a suitable raised content of a suitable polar substance. The polar groups act as trap sites for charges, whereby the mobility of any charges is restricted. Thereby substantially reducing the accumulation of space charges within the cross-linked insulation layer when the insulation is subjected to an electric DC field. Further the polar enriched surface zone(s) also increases the capability of the insulation layer to withstand charge injection. Polar groups within the polar enriched surface zone(s), acting as traps sites for any space charges, also provides means for controlling any developing space charge profile or pattern to avoid harmful polarized patterns or profiles developing within the insulation layer. The present invention is in particular favorable in cables having an insulation system wherein the insulation system comprises an extruded, cross-linked polyethylene based composition, an XLPE composition. Typically such an insulation system also comprises one or more semi-conductive layers arranged adjacent to the surfaces of the insulating layer. Preferably a cable according to the present invention comprises:

- a first inner semi-conductive shield disposed on and around the conductor; and
- an insulation layer disposed on and around the first inner semi-conductive shield:
   wherein the insulation layer comprises a first, inner, polar enriched surface zone disposed within the insulation layer at the inner interface between the inner semi-conductive shield and the insulation layer.

According to one favorable embodiment the insulation system further comprise a second outer semi-conductive shield disposed on and around the insulation layer, wherein a second, outer, polar enriched surface zone disposed within the insulation layer at the outer interface between the outer semi-conductive shield and the insulation layer.

Polar substances which have been found suitable for use in the polar enriched zone in a cable according to the present invention are carbonyl groups. The carbonyl groups are introduced into the polar enriched zone either through oxidizing polyethylene or by co-polymerization of carbon monoxide with ethylene within the polar enriched zone. Favorable contents of carbonyl groups have been found to be from 0.1 to 1.5 % by weight. Most preferred is contents of carbonyl groups ranging from 0.4 to 1.0 % by weight. Other embodiments of the present invention comprises insulating layers to which additives in the form of organic acids or anhydrides have been made. These additives were found to have similar effects on the accumulation of space charges, the capability to withstand charge injection and possibility to control any developing space charge pattern to avoid the development of any polarized space charge profile as discussed in the foregoing.

According to another embodiment of the present invention the insulating layer comprises polar units introduced into the polymer chain. Also these polar units were found to act as trap sites for space charges, whereby also in this case the mobility of any space charges is restricted and the accumulation space charges within the cross-linked insulation layer is substantially reduced. The polar units act as traps sites for any space charges thereby reducing the space charge accumulation, increasing the capability to withstand charge injection and also providing means for controlling the developing pattern of space charges to avoid the development of any polarized pattern within the insulation layer. A cable according to one embodiment of the present invention comprises an XLPE based insulation layer wherein Maleic Acid Anydride, MAH, has been grafted onto the polyethylene within the polar enriched surface zone for this purpose. The resulting cross-linked insulation layer exhibits a decreased tendency for space charge accumulation and an increased capability to withstand charge injection. Both these effects are attributed to the increased polarity of the cross-linked polymer chain structure within the polar enriched surface zone. The polar units within the polymer chain structure also offers a tool for controlling any developing charge pattern within the insulation layer which is valuable to avoid any polarized pattern or profile. Crosslinked polyethylene with additions of MAH at levels corresponding to from about 0.01 to about 1.0 % by weight has been found to result in cross-linked composition suitable for use in the polar enriched zone of the insulation layer in a DC-cable to achieve the desired decrease in space charge accumulation, increased capability to withstand charge injection and possibility to control any developing space charge accumulation profile. Other additions deemed suitable for use to achieve this type of polar modification of the cross-linked structure and thus to achieve the desired reduction in space charge accumulation, increased capability to withstand charge injection and possibility to control any developing space charge accumulation profile in the cross-linked insulation is ionomers, acrylic metal salts, carboxylic acid and acetates.

According to one further embodiment of the present invention an XLPE insulation layer comprised a polar enriched surface zone wherein a polar co-monomer having the general formula CH₂=CR-CO-X-(CH₂)ₙ-N(CH₃)₂ or CH₂=CR-CO-O-(CH₂-CH₂O)ₘ-H was introduced into the polyethylene chain. In this general formula n is equal to 2 or 3, m is equal to a number between 1 and 20, R is H or CH₃ and X is O or NH. Preferably m is equal to 1, 5, 6. or 9. The polar co-monomers was in this case introduced in to the polyethylene chain and either formed a segment in the chain backbone during the polymerization or a pending side group in a grafting operation. Typically an amount of polar monomer in excess of 0.1 % by weight of the total polymer in the polar enriched surface zone of the insulation layer has been found suitable. Preferably an amount of 0.1 to 5 % by weight of the polar co-monomer shall be used. Most preferred is a content of the polar co-monomer ranging from 0.5 to 1. 5 % by weight. A preferred polar co-monomers according to this embodiment is based on metacrylic amide and has the general formula CH₂=C(CH₃)-CO-NH-(CH₂)ₙ-N(CH₃)₂, where n is equal to 2 or 3. The co-monomer having n=3 and designated dimethylamino-propylmetacryl-amide (DMAPMA) has been found most suitable. Other polar co-monomers found suitable for introduction into the polymeric chain in the polar enriched zone(s) of the insulating layer of a cable according to the present invention are:
- co-monomers based on acrylic amide, having the general formula
   CH₂=CH-CO-NH-(CH₂)ₙ-N(CH₃)₂, where n is equal to 2 or 3;
- co-monomers based on metacrylic ester, having the general formula
   CH₂=C(CH₃)-CO-O-(CH₂)ₙ-N(CH₃)₂, where n is equal to 2 or 3;
- co-monomers based on acrylic ester, having the general formula
   CH₂=CH-CO-O-(CH₂)ₙ-N(CH₃)₂, where n is equal to 2 or 3;
- co-monomers based on metacrylic acid and oligomeric ethyleneglycol, having the general formula CH₂=C(CH₃)-CO-O-(CH2-CH₂O-)ₘH, where m.is equal to a number between 1 and 20, preferably m is equal to 1, 5, 6, or 9; and
- co-monomers based on acrylic acid and oligomeric ethyleneglycol, having the general formula CH₂=CH-CO-O-(CH₂-CH₂O-)ₘH, where m is equal to a number between 1 and 20, preferably m is equal to 1, 5, 6, or 9.
   An insulated electric cable according to the present invention can be produced with a process which typically comprises the following steps, not necessarily in the order given below;
- compounding or otherwise producing composition in a way such that it is given a suitable content of polar groups or polar units for the desired polar enriched composition.
- extruding the compounded polyethylene composition having a raised content of polar units or polar groups, as a surface zone contained within an insulation layer of a polymer based insulation system disposed around a conductor and comprising an insulation layer and at least one semi-conductive layer; and
- subsequently cross-linking the polar enriched PE composition into a polar enriched XLPE composition contained as a surface of the insulation layer.
   In the following will suitable processing for a cable according to the present invention be examplified. To achieve the polar groups within the polar enriched surface zones can a polymeric compound, e.g. polyethylene be oxidized to form a polar enriched polymeric composition comprising carbonyl groups suitable for use in surface zones of the insulating layer in a cable according to the present invention. Alternatively can the carbonyl groups be introduced through a co-polymerization of carbon monoxide and ethylene. A composition to be used in the polar enriched surface zone(s) of the insulation layer can also be produced in a compounding step wherein a polar monomer is added to the ethylene prior to or during the polymerization reaction. In this way the co-monomer will be built into the backbone of the polymer and be integrated with the polyethylene chain. The polar co-monomer is typically added to the polymer in an amount of from 0.05 to 5 % by weight of the finished polymer and preferably in an amount of from 0.3 to 1.5 % by weight of the finished polymer. Alternatively the ethylene and the polar monomer is copolymerized in a similar manner but the amount of comonomer is now considerably higher, e.g. 5 - 40 % by weight, and preferably 25 - 35 % by weight of the finished polymer. Such a copolymer with high amount of polar comonomer is subsequently diluted by compounding the copolymer with straight polyethylene until the average polar comonomer content is the same as described in foregoing. Still another suitable way to produce a composition to be used in the polar enriched zone(s) of a cable according to the present invention is to graft a the polar monomer on a homopolymer of ethylene. The grafting process can be performed either in a separate step after the polymerization process or it might be executed during the extrusion and/or cross-linking of the polyethylene based cable insulation.
   A cable according to the present invention with an extruded, cross linked insulation system. such as an insulating system comprising an extruded, cross-linked polyethylene based composition. an XLPE composition, with a polar enriched surface zone introduced into the insulating layer exhibit considerable advantages such as;
- A substantially reduced tendency for space charge accumulation;
- A substantially increased capability to withstand charge injection
- A tool for control of any developing space charge pattern or profile; and
- An increased DC breakdown strength.
   A cable according to the present invention thus offers good performance and stability of the extruded cable insulation system also when high temperatures have been employed during extrusion. cross-linking or other high temperature conditioning.
   It is, as always, favorable if the content of any unreacted peroxide cross-linking agent or any by products or degradation products in an extruded XLPE composition can be minimized to further reduce any tendency for space charge. Thus the peroxide content of a PE composition to be extruded and cross-linked into an insulation system for a cable according to the present invention shall be less than 5 % and preferably less than 2 %. The essential elimination or substantial reduction of excess peroxide remnants in the insulation of the cable is advantageous considering the cost of the peroxide cross-linking agent and more important considering the fact that the peroxide cross-linking agent upon degradation is likely to form undesired by-products such as methane, cumyl alcohol or acetophenone, which is a source of space charges.
   A cable according to the present invention is suitably adapted to meet the specific requirements for use as a cable for transmission or distribution of electric power, such as a High Voltage Direct Current transmission cable, or other cable wherein the insulation layer is subjected to a high voltage stress without resorting to time consuming batch treatments. All the advantageous properties and improvements over prior art cables having an insulation system comprising an extruded XLPE composition, is for a cable according to the present invention achieved without the many disadvantages associated with some prior art cables. The substantially reduced tendency for space charge accumulation, and the increased capability to withstand charge injection ensures that the high DC breakdown strength of conventional DC-cables comprising an impregnated paper insulation is maintained or improved. The possibility to control any developing space charge profile provides means for avoiding any unfavorable space charge pattern within the insulating layer of the cable insulation. Further the insulating properties of a cable according to the present invention exhibit a general long term stability such that the working life of the cable is maintained or increased. This is achieved in particular by the implementation of a polar enriched zone(s) in the insulation layer. It is further enhanced by the controlled processing of the polymeric compositions to be used in the insulation system prior to and during extrusion and cross-linking, wherein process variables such as temperatures. pressures, processing times, atmosphere composition are closely controlled.
   A cable according to the present invention offers as an extra advantage the capability of being produced by an essentially continuous process without any time consuming batch step such as impregnation or degassing, thereby opening for substantial reduction in production time and thus the production costs without risking the technical performance of the cable.
   A cable as defined in the foregoing is especially advantageous for operation under the specific conditions prevailing in high-voltage transmission or distribution cable used in a network or installation for transmission or distribution of electrical power, due to the improved thermal properties combined with maintained or improved electrical properties. This is especially important due to the long life such installations are designed for, and the limited access for maintenance to such installations of being installed in remote locations or even sub-sea. One further advantage for a high-voltage cable produced according to the present invention is that the production time can be substantially reduced by the adoption of an essentially continuous process free from operating steps requiring batch treatment of complete cable lengths or part lengths offer cost advantages compared to conventional cables.
   A cable according to the present invention is also beneficial for use as an insulated conductor in a high voltage winding for an electric machine such as a generator, a transformer, a reactor or a motor as the reduced tendency space charge accumulation and in particular the increased capability to withstand charge injection offers a possibility to increase the field stress, i.e. the voltage stress, without risking any detrimental effects at the interfaces between the insulation layer and the semi-conductive layers due to uncontrolled space charge accumulation or charge injection.

### BRIEF DESCRIPTION OF THE DRAWINGS

The present invention shall be described more in detail while referring to the drawings and examples.
Figure 1 shows a cable suitable for high-voltage transmission of electric power according to one embodiment of the present invention.
Figure 2 shows a cable to be used as an insulated conductor for a high-voltage winding in an electric machine according to another embodiment of the present invention.
Figures 3a, 3b, 3c and 3d show space charge recordings for comparative tests on plates with XLPE compositions as used in prior art insulated AC-cables and for compositions suitable as polar enriched compositions to be used in insulated cables according to the present invention.

### DESCRIPTION OF PREFERRED EMBODIMENTS, EXAMPLES.

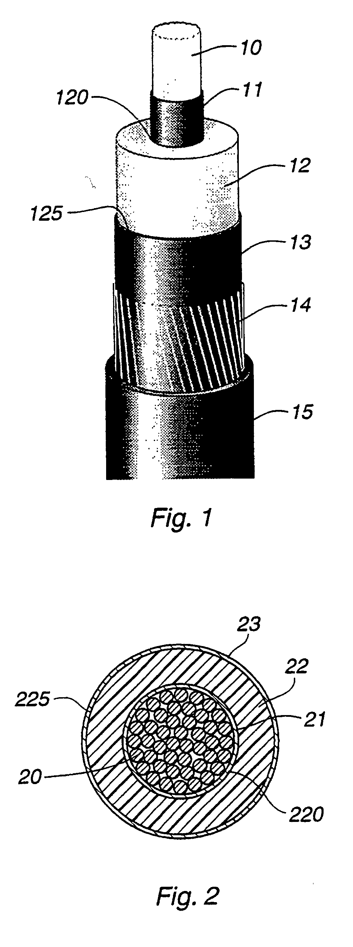

The high voltage transmission cable according to the embodiment of the present invention shown in figure 1 comprises from the center and outwards;
- a stranded multi-wire conductor 10;
- a first extruded inner semi-conducting shield 11 disposed around and outside the conductor 10 and inside a conductor insulation 12;
- an extruded conductor insulation 12 with an extruded, cross-linked composition as described in the foregoing comprising one first polar enriched surface zone 120 adjacent to the interface between the insulation layer 12 and the inner semi-conductive shield 11 and one second polar enriched surface zone 125 adjacent to the interface between the insulation layer 12 and the outer semi-conductive shield 13;
- a second extruded semi-conducting shield 13 disposed outside the conductor insulation 12;
- a metallic screen 14; and
- an outer covering or sheath 15 arranged outside the metallic screen 14. Both semi-conducting shields 11, 13 and the insulation layer 12 comprising the two polar enriched zones 120, 125 are typically extruded and crosslinked and are also typically polyethylene based.
A cable according to the present invention can when deemed appropriate be further complemented in various ways with various functional layers or other features. It can for example be complemented with a reinforcement in form of metallic wires outside the outer extruded shield 13. a sealing compound or a water swelling powder introduced in metal/polymer interfaces or a system of radial achieved by e.g. a corrosion resistant metal polyethylene laminate and longitudinal water sealing achieved by water swelling material, e.g. tape or powder beneath the sheath 15. The conductor can be of any desired shape and constitution. such as a stranded multi-wire conductor or a segmental conductor.

The insulated cable according to the embodiment of the present invention shown in figure 2 is intended to be used in a high voltage winding in an electric machine and comprises from the center and outwards;
- a stranded multi-wire conductor 20;
- a first inner semi-conducting shield 21 disposed around and outside the conductor 20;
- a conductor insulation 22 with a composition as described in the foregoing comprising one first polar enriched surface zone 220 adjacent to the interface between the insulation layer 22 and the inner semi-conductive shield 21 and one second polar enriched surface zone 225 adjacent to the interface between the insulation layer 22 and the outer semi-conductive shield 23;
- a second semi-conducting shield 23 disposed outside the conductor insulation 22.
Both semi-conducting shields 21, 23 and the insulation layer 22 comprising the two polar enriched zones 220, 225 are typically extruded and crosslinked and are also typically polyethylene based. The cable typically comprises no further reinforcement. Nor does it comprise any outer covering or sheath as the outer semi-conductive shield is to be disposed in contact with the groove or similar object in which the winding is arranged. The conductor can be of any desired shape and constitution, such as a stranded multi-wire conductor or a segmental conductor.

### EXAMPLE 1

Comparative tests for XLPE compositions to be used in the polarenriched XLPE zones within the insulation layer of the insulation system in a cable according to the present invention.

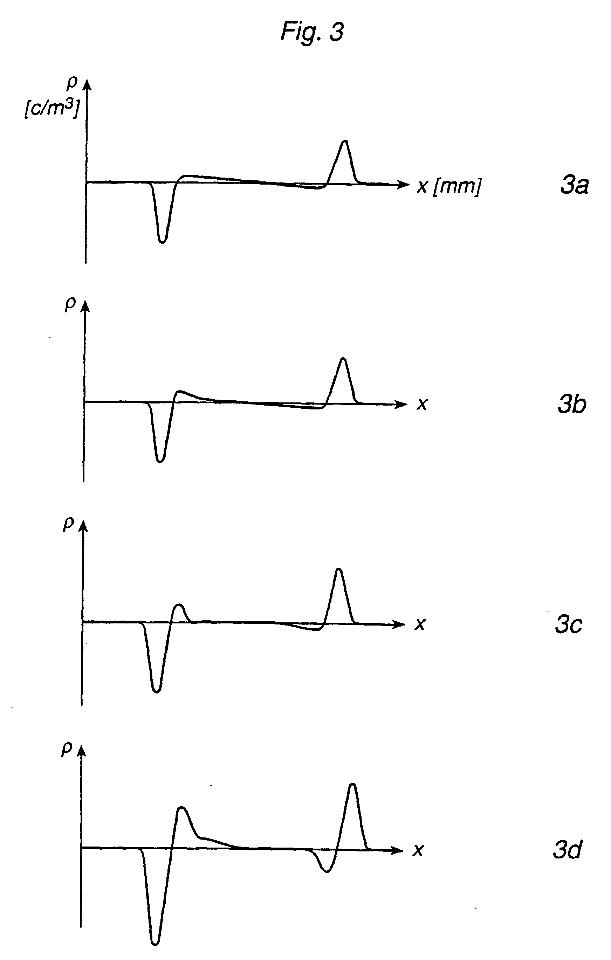

Test plates with XLPE compositions as used in prior art insulated AC-cables and for compositions to be used in the polar enriched zones in accordance with the present invention for use in insulated high voltage cables or insulated conductors for a high voltage winding in an electric machine were produced, processed and subjected to an evaluation of the tendency for space charge accumulation by recording space charge profiles using the Pulsed ElectroAccoustic (PEA) technique. The PEA technique is well known within the art and described by Takada et al. in IEEE Trans. Electr. Insul. Vol. EI-22(No.4). pp 497-501(1987) .
a. A polyethylene composition was prepared by adding about 1 % by weight of dimethylamino-propylmetacryl-amide, DMAPMA to about 99 % by weight of low density polyethylene composition, wherein this PE composition comprised about 98 % by weight of low density polyethylene (922 kg/m³) with a melt flow rate of 0,8 g/10 min and about 2 % by weight of a conventional system of antioxidant and peroxide cross-linking agent.
   A 2 mm thick test plate of a this prepared polyethylene was molded at 130°C, whereafter, two semi-conductive electrodes were molded on the test plate and the assembly was cross-linked in an electric press at 180°C for 15 minutes.
   The 2 mm thick cross-linked test plate was subsequently tested at 50°C in a device for PEA analysis where the plate was inserted between two flat electrodes and subjected to a 40 kV direct voltage electric field. That is one electrode was grounded and the other electrode was held at a voltage potential of + 40kV. The space charge profile as shown in figure 3a was recorded for the test plate. Where arbitrary units for space charge/volume is presented as a function of the test plate thickness, i.e. 0 is at the grounded electrode and x indicates the distance from the grounded electrode in the direction towards the + 40 kV electrode.
b, A 2 mm thick test plate of a the same polyethylene composition comprising DMAPMA as prepared in comparative example a was molded, also at 130°C. Two semi-conductive electrodes were molded on this test plate and the assembly was cross-linked in an electric press at 250°C for 30 minutes.
   The 2 mm thick cross-linked test plate was subsequently tested at 50°C in a device for PEA analysis where the plate was inserted between two flat electrodes and subjected to a 40 kV direct voltage electric field. That is one electrode was grounded and the other electrode was held at a voltage potential of + 40kV. The space charge profile as shown in figure 3b was recorded for the test plate. Where arbitrary units for space charge/volume is presented as a function of the test plate thickness. i.e. 0 is at the grounded electrode and x indicates the distance from the grounded electrode in the direction towards the + 40 kV electrode.
c, A 2 mm thick test plate of a conventional polyethylene composition comprising as used in examples a and b but without the DMAPMA was molded at 130°C.
   Two semi-conductive electrodes were molded on the test plate and the assembly was cross-linked in an electric press at 180°C for 15 minutes.
   The 2 mm thick cross-linked test plate was subsequently tested at 50°C in a device for PEA analysis where the plate was inserted between two flat electrodes and subjected to a 40 kV direct voltage electric field. That is one electrode was grounded and the other electrode was held at a voltage potential of + 40kV. The space charge profile as shown in figure 3c was recorded for the test plate. Where arbitrary units for space charge/volume is presented as a function of the test plate thickness, i.e. 0 is at the grounded electrode and x indicates the distance from the grounded electrode in the direction towards the + 40 kV electrode.
d, A 2 mm thick test plate of a polyethylene composition as in example c was molded at 130°C.

Two semi-conductive electrodes were molded on the test plate and the assembly was cross-linked in an electric press at 250°C for 30 minutes.

The 2 mm thick cross-linked test plate was subsequently tested at 50°C in a device for PEA analysis where the plate was inserted between two flat electrodes and subjected to a 40 kV direct voltage electric field. That is one electrode was grounded and the other electrode was held at a voltage potential of + 40kV. The space charge profile as shown in figure 3d was recorded for the test plate. Where arbitrary units for space charge/volume is presented as a function of the test plate thickness, i.e. 0 is at the grounded electrode and x indicates the distance from the grounded electrode in the direction towards the + 40 kV electrode.

### CONCLUSIONS OF COMPARATIVE TESTS

The space charge profiles of the samples in example 1a, 1b, 1c, and 1d recorded 3 hours after the application of the DC voltage are shown in figures 3a, 3b, 3c, and 3d. respectively. It is clearly seen that the space charge accumulation in the insulation material traditionally used in AC XLPE cables (see figure 3c and 3d) is high and that the tendency for space charge accumulation is substantially reduced for the two compositions according to the present invention represented with comparative examples figures 3a and 3b.

## Claims

1. An insulated electric cable having a polymer based insulation system comprising an insulation layer (12;22) and one or more semi-conductive layers (11;13;21;23) disposed around a conductor (10;20), wherein the insulation layer comprises an electrically insulating polymeric composition, **characterized in that** the polymeric composition comprises a polar enriched surface zone (120;125;220;225) having a suitable raised content of a suitable polar substance, and that the polar substance comprises polar groups in the form of carbonyl groups.

2. A cable according to claim 1, **characterized in that** the insulation system comprises:
- a first inner semi-conductive shield (11;21) disposed on and around the conductor (10;20);
- an insulation layer (12;22) disposed on and around the first inner semi-conductive shield; wherein the insulation layer comprises a first, inner, polar enriched surface zone (120;220) disposed at the inner interface between the inner semi-conductive shield and the insulation layer.

3. A cable according to claim 2, **characterized in that** the insulation system further comprises a second outer semi-conductive shield (13;23) disposed on and around the insulation layer (12;22) and that the insulation layer comprises a second, outer, polar enriched surface zone (125;225) disposed at the outer interface between the outer semi-conductive shield and the insulation layer.

4. A cable according to claim 1, 2 or 3, **characterized in that** the insulation layer (12;22) comprises an extruded and cross-linked, polyethylene based, XLPE, composition

5. A cable according to claim 1, 2, 3 or 4, **characterized in that** the polymer chain comprises a polar modification in the form of polar segments.

6. A cable according to claim 5, **characterized in that** the polar segments are presents as polar side-groups grafted on to the polymer chain.

7. A cable according to claim 5, **characterized in that** the polar segments are present as moieties in the chain backbone of the polymer chain.

8. A cable according to claim 7, **characterized in that** comprising the polar segment comprises a polar co-monomer having the general formula:
CH₂=CR-CO-X-(CH₂)ₙ-N(CH₃)₂ or CH₂=CR-CO-O-(CH₂-CH₂O)ₘ-H
where n is equal to 2 or 3; m is equal to a number from 1 to 20; R is H or CH₃ ; and X is O or NH.

9. A cable according to claim 8, **characterized in that** the polar comonomer is based on metacrylic amide with the general formula: CH₂=C(CH₃)-CO-NH-(CH₂)ₙ-N(CH₃)₂ where n is equal to 2 or 3

10. A cable according to claim 9, **characterized in that** n=3 and the polar monomer is dimethylamino-propylmetacryl-amide (DMAPMA).

11. A cable according to claim 8, **characterized in that** the polar monomer is based on acrylic amide and of the general formula:
CH₂=CH-CO-NH-(CH₂)n-N(CH₃)₂
where n is equal to 2 or 3.

12. A cable according to claim 8, **characterized in that** the polar monomer is based on metacrylic ester and of the general formula: CH₂=C(CH₃)-CO-O-(CH₂)n-N(CH₃)₂ where n is equal to 2 or 3.

13. A cable according to claim 8, **characterized in that** the polar monomer is based on acrylic ester and of the general formula: CH₂=CH-CO-O-(CH₂)n-N(CH₃)₂
where n is equal to 2 or 3.

14. A cable according to claim 8 **characterized in that** the polar monomer is based on metacrylic acid and oligomeric ethyleneglycole and of the general formula:
CH₂=C(CH₃)-CO-O-(CH₂-CH₂O-)ₘH
where m is equal to a number from 1 to 20, preferably n is equal to 1, 5, 6 or 9.

15. A cable according to claim 8, **characterized in that** the polar monomer is based on acrylic acid and oligomeric ethyleneglycole and of the general formula:
CH₂=CH-CO-O-(CH₂-CH₂O-)ₘH
where m is equal to a number from 1 to 20, preferably n is equal to 1, 5, 6 or 9.

16. Use of a cable according to any of the preceding claims in a system or installation for transmission or distribution of electric power.

17. Use of a cable according to any of claims 1-15 as a conductor in a high voltage winding in an electric machine.

## Patentansprüche

1. Isoliertes elektrisches Kabel mit einem auf einem Polymer basierenden Isolationssystem, umfassend eine Isolationsschicht (12, 22) und eine oder mehrere halbleitende Schichten (11, 13, 21, 23), die um einen Leiter (10, 20) angeordnet sind, wobei die Isolationsschicht eine elektrisch isolierende polymere Zusammensetzung aufweist, **dadurch gekennzeichnet, dass** die polymere Zusammensetzung einen polar angereicherten Oberflächenbereich (120, 125, 220, 225) mit einem geeignet erhöhten Inhalt einer geeigneten polaren Substanz, und dass die polare Substanz polare Gruppen in der Form von Carbonyl-Gruppen aufweist.

2. Kabel nach Anspruch 1, **dadurch gekennzeichnet, dass** das Isolationssystem umfasst:
- einer erste innere halbleitende Abschirmung (11, 21), die um und auf dem Leiter (10, 20) angeordnet ist; und
- eine Isolationsschicht (12, 22), die um und auf der ersten inneren halbleitenden Abschirmung angeordnet ist,
wobei die Isolationsschicht einen ersten inneren polar angereicherten Oberflächenbereich (120, 220) aufweist, der an dem inneren Übergang zwischen der inneren halbleitenden Abschirmung und der Isolationsschicht angeordnet ist.

3. Kabel nach Anspruch 2, **dadurch gekennzeichnet, dass** das Isolationssystem weiter eine zweite äußere halbleitende Abschirmung (13, 23) aufweist, die auf und um die Isolationsschicht (12, 22) angeordnet ist, und dass die Isolationsschicht einen zweiten äußeren polar angereicherten Oberflächenbereich (125, 225) aufweist, der an dem äußeren Übergang zwischen der äußeren halbleitenden Abschirmung und der Isolationsschicht angeordnet ist.

4. Kabel nach Anspruch 1, 2 oder 3, **dadurch gekennzeichnet, dass** die Isolationsschicht (12, 22) eine extrudierte und vernetzte, auf Polyethylen basierende XLPE-Zusammensetzung aufweist.

5. Kabel nach Anspruch 1, 2, 3 oder 4, **dadurch gekennzeichnet, dass** die Polymerkette eine polare Modifikation in der Form eines polaren Segments aufweist.

6. Kabel nach Anspruch 5, **dadurch gekennzeichnet, dass** die polaren Segmente als polare Seitengruppen vorliegen, die auf die Polymerkette aufgepfropft sind.

7. Kabel nach Anspruch 5, **dadurch gekennzeichnet, dass** die polaren Segmente als Anteile in dem Kettenrückgrat der Polymerkette vorliegen.

8. Kabel nach Anspruch 7, **dadurch gekennzeichnet, dass** die polaren Segmente ein polares Co-Momoner aufweisen, das die allgemeine Formel:
CH₂=CR-CO-X-(CH₂)ₙ-N(CH₃)₂ oder CH₂=CR-CO-O-(CH₂-CH₂O)ₘ-H
aufweist, wobei n gleich 2 oder 3 ist, m gleich einer Zahl von 1 bis 20 ist, R H oder CH ist, und X O oder NH ist.

9. Kabel nach Anspruch 8, **dadurch gekennzeichnet, dass** das polare Co-Monomer auf einem Metacrylamid mit der allgemeinen Formel
CH₂=C(CH₃)-CO-NH-(CH₂)ₙ-N(CH₃)₂
basiert, wobei n gleich 2 oder 3 ist.

10. Kabel nach Anspruch 9, **dadurch gekennzeichnet, dass** n=3 ist, und dass das polare Monomer Dimethylamino-propylmetacryl-amid ist (DMAPMA).

11. Kabel nach Anspruch 8, **dadurch gekennzeichnet, dass** das polare Monomer auf Acrylamid basiert und die allgemeine Formel
CH₂=CH-CO-NH-(CH₂)ₙ-N(CH₃)₂
aufweist, wobei n gleich 2 oder 3 ist.

12. Kabel nach Anspruch 8, **dadurch gekennzeichnet, dass** das polare Monomer auf Metacrylester basiert und die allgemeine Formel
CH₂=C(CH₃)-CO-O-(CH₂)ₙ-N(CH₃)₂
aufweist, wobei n gleich 2 oder 3 ist.

13. Kabel nach Anspruch 8, **dadurch gekennzeichnet, dass** das polare Monomer auf Acrylester basiert und die allgemeine Formel
CH₂=CO-O-(CH₂)ₙ-N(CH₃)₂
aufweist, wobei n gleich 2 oder 3 ist.

14. Kabel nach Anspruch 8, **dadurch gekennzeichnet, dass** das polare Monomer auf Metacrylsäure und oligomerischem Ethylenglykol basiert und die allgemeine Formel
CH₂=C(CH₃)-CO-O-(CH₂-CH₂O-)ₘH
aufweist, wobei m gleich einer Zahl von 1 bis 20 ist, und m bevorzugt gleich 1, 5, 6, oder 9 ist.

15. Kabel nach Anspruch 8, **dadurch gekennzeichnet, dass** das polare Monomer auf Acrylsäure und oligomerischem Ethylenglykol basiert und die allgemeine Formel
CH₂=CH-CO-O-(CH₂-CH₂O-)ₘH
aufweist, wobei m gleich einer Zahl von 1 bis 20 ist, und m bevorzugt gleich 1, 5, 6, oder 9 ist.

16. Verwendung eines Kabels gemäß einem der vorhergehenden Ansprüche in einem System oder einer Installation zur Übertragung oder Verteilung von elektrischem Strom.

17. Verwendung eines Kabels gemäß einem der Ansprüche 1 bis 15 als ein Leiter in einer Hochspannungswicklung in einer elektrischen Maschine.

## Revendications

1. Câble électrique isolé, doté d'un système d'isolation à base de polymères, qui comporte une couche isolante (12 ; 22) et une ou plusieurs couches semi-conductrices (11, 13 ; 21, 23), disposées autour d'un conducteur (10 ; 20), et dans lequel la couche isolante comprend une composition polymère électriquement isolante, **caractérisé en ce que** cette composition polymère comprend une zone superficielle (120, 125 ; 220, 225) enrichie en matière polaire, c'est-à-dire contenant une matière polaire appropriée en une quantité convenablement élevée, et **en ce que** cette matière polaire comprend des groupes polaires qui sont des groupes carbonyle.

2. Câble conforme à la revendication 1, **caractérisé en ce que** le système d'isolation comporte :
- un premier écran semi-conducteur interne (11 ; 21), disposé par-dessus le conducteur (10 ; 20) et autour de celui-ci ;
- et une couche isolante (12 ; 22), disposée par-dessus le premier écran interne semi-conducteur et autour de celui-ci ;
laquelle couche isolante comprend une première zone superficielle interne (120 ; 220) enrichie en matière polaire, située au niveau de l'interface interne entre l'écran semi-conducteur interne et la couche isolante.

3. Câble conforme à la revendication 2, **caractérisé en ce que** le système d'isolation comporte en outre un deuxième écran semi-conducteur externe (13 ; 23), disposé par-dessus la couche isolante (12 ; 22) et autour de celle-ci, et **en ce que** la couche isolante comprend une deuxième zone superficielle externe (125 ; 225) enrichie en matière polaire, située au niveau de l'interface externe entre l'écran semi-conducteur externe et la couche isolante.

4. Câble conforme à la revendication 1, 2 ou 3, **caractérisé en ce que** la couche isolante (12 ; 22) contient une composition XLPE à base de polyéthylène, extrudée et réticulée.

5. Câble conforme à la revendication 1, 2, 3 ou 4, **caractérisé en ce que** la chaîne polymère comporte des modifications polaires qui sont des segments polaires.

6. Câble conforme à la revendication 5, **caractérisé en ce que** les segments polaires se trouvent sous la forme de groupes latéraux polaires greffés sur la chaîne polymère.

7. Câble conforme à la revendication 5, **caractérisé en ce que** les segments polaires se trouvent sous la forme de motifs du squelette de la chaîne polymère.

8. Câble conforme à la revendication 7, **caractérisé en ce que** le segment polaire comprend un comonomère polaire de formule générale
CH₂=CR-CO-X-(CH₂)ₙ-N(CH₃)₂
ou
CH₂=CR-CO-O-(CH₂-CH₂-O-)ₘ-H
où n vaut 2 ou 3, m représente un nombre qui vaut de 1 à 20, R représente -H ou -CH₃, et X représente O ou NH.

9. Câble conforme à la revendication 8, **caractérisé en ce que** le comonomère polaire est un dérivé du méthacrylamide, de formule générale
CH₂=C(CH₃)-CO-NH-(CH₂)ₙ-N(CH₃)₂
où n vaut 2 ou 3.

10. Câble conforme à la revendication 9, **caractérisé en ce que** n vaut 3, le monomère polaire étant donc du DMAPMA (diméthylamino-pro-pyl-méthacrylamide).

11. Câble conforme à la revendication 8, **caractérisé en ce que** le monomère polaire est un dérivé de l'acrylamide, de formule générale
CH₂=CH-CO-NH-(CH₂)ₙ-N(CH₃)₂
où n vaut 2 ou 3.

12. Câble conforme à la revendication 8, **caractérisé en ce que** le monomère polaire est un dérivé de méthacrylate, de formule générale
CH₂=C(CH₃)-CO-O-(CH₂)ₙ-N(CH₃)₂
où n vaut 2 ou 3.

13. Câble conforme à la revendication 8, **caractérisé en ce que** le monomère polaire est un dérivé d'acrylate, de formule générale
CH₂=CH-CO-O-(CH₂)ₙ-N(CH₃)₂
où n vaut 2 ou 3.

14. Câble conforme à la revendication 8, **caractérisé en ce que** le monomère polaire est un dérivé de l'acide méthacrylique et d'un oligomère d'éthylène-glycol, de formule générale
CH₂=C(CH₃)-CO-O-(CH₂-CH₂-O-)ₘH
où m représente un nombre qui vaut de 1 à 20, et de préférence 1, 5, 6 ou 9.

15. Câble conforme à la revendication 8, **caractérisé en ce que** le monomère polaire est un dérivé de l'acide acrylique et d'un oligomère d'éthylène-glycol, de formule générale
CH₂=CH-CO-O-(CH₂-CH₂-O-)ₘH
où m représente un nombre qui vaut de 1 à 20, et de préférence 1, 5, 6 ou 9.

16. Emploi d'un câble conforme à l'une des revendications précédentes dans un système ou une installation de transmission ou de distribution d'énergie électrique.

17. Emploi d'un câble conforme à l'une des revendications 1 à 15 en tant que conducteur dans un enroulement haute tension d'une machine électrique.
